# EUROPEAN PATENT SPECIFICATION

(11) **EP 1 145 049 B1**
(45) Date of publication and mention of the grant of the patent: **07.04.2010**
(21) Application number: 99966800.7
(22) Date of filing: 24.12.1999
(51) Int. Cl.: G01V 15/00, G08B 13/24, G06K 19/073, G06K 19/07

(54) **OBJECT AND DOCUMENT CONTROL SYSTEM**
KONTROLLEANNORDNUNG VON OBJEKTEN UNDDOKUMENTEN
SYSTEME DE CONTROLE D'OBJETS ET DE DOCUMENTS

(30) Priority: 24.12.1998 AU PP795498
(43) Date of publication of application: 17.10.2001
(73) Proprietor: Gemalto SA, 92190 Meudon (FR)
(72) Inventor: COLE, Peter, Harold, West Lakes Shore, South Australia 5020 (AU); HALL, David Malcolm, Evandale, South Australia 5069 (AU)
(74) Representative: Grevin, Emmanuel
(86) International application number: PCT/AU1999/001165
(87) International publication number: WO 2000/039613

(56) References cited:
- WO-A-87/04282
- WO-A-97/22085
- WO-A-98/01837
- WO-A-99/05658
- US-A- 5 710 540
- PATENT ABSTRACTS OF JAPAN & JP 11 053 492 A (DENSO CORP.) 26 February 1999

## Description

The present invention relates to a system for identification and/or secure control of a system of documents or other objects which require storage between periods of intermittent acquisition or use by a number of authorised users, by means of attachment thereto of electronically coded labels which can be read, programmed and detected by electromagnetic means at a distance. In one particular application, the objects may be books or various forms of recorded media which may be stored within, or borrowed from a library.

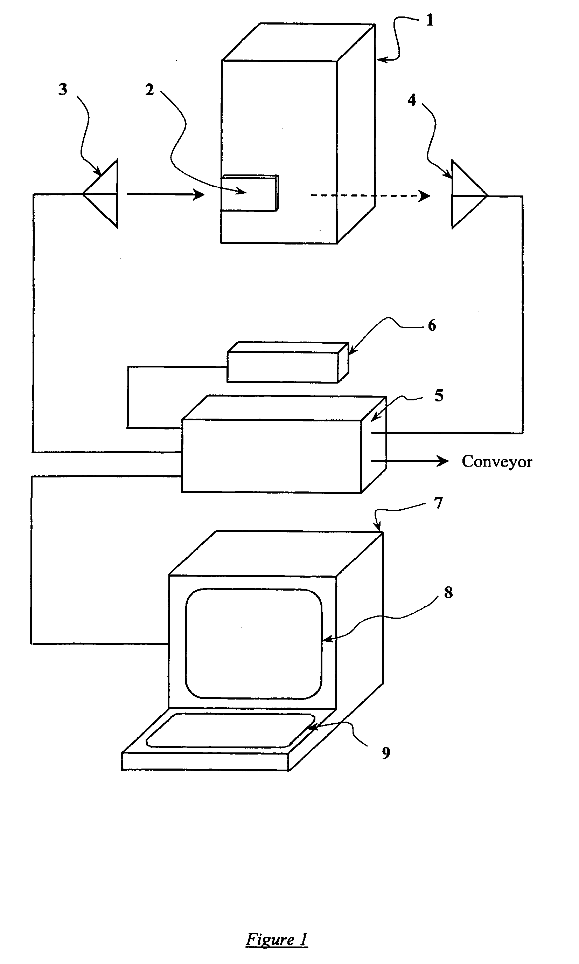

An outline of a system to which this invention applies is illustrated in Figure 1, wherein an object (1) carries an electronic label (2) which may be interrogated by electromagnetic means. An interrogator (5) connected to an interrogator antenna (3) may transmit to the label an interrogation signal, and the label may in response to such interrogation signal transmit a reply to a receiver antenna (4) and thence to a receiver of the interrogator wherein the reply is detected, decoded and acted upon.

In one of the contexts of interrogation, the reply from the label may carry information to indicate that the labelled object should not be allowed to be carried between the antennas of the interrogator, and in response to that information the interrogator may raise an alarm. In another context to which the diagram of Figure 1 applies, the information from the label on the object may provide an identification of the object, and the interrogator may in consequence derive control signals which assist in the sorting, handling and indexing of the object in a data base.

In a third context to which the diagram in Figure 1 is applicable the interrogator may change through remote electromagnetic programming the information within the label so that its response in the previously described contexts is modified. As in almost all such systems, the interrogator may be connected to an operator console which may be used to monitor or control any of the previously described processes.

Many of the principles of the remote interrogator and programming of electromagnetically coded labels are described in the disclosures of PCT AU/90 00043, PCT AU/92 00143, PCT AU 92/00477, PCT AU 97/00428 and PCT AU 98/00017 and PCT AU/97 00385.

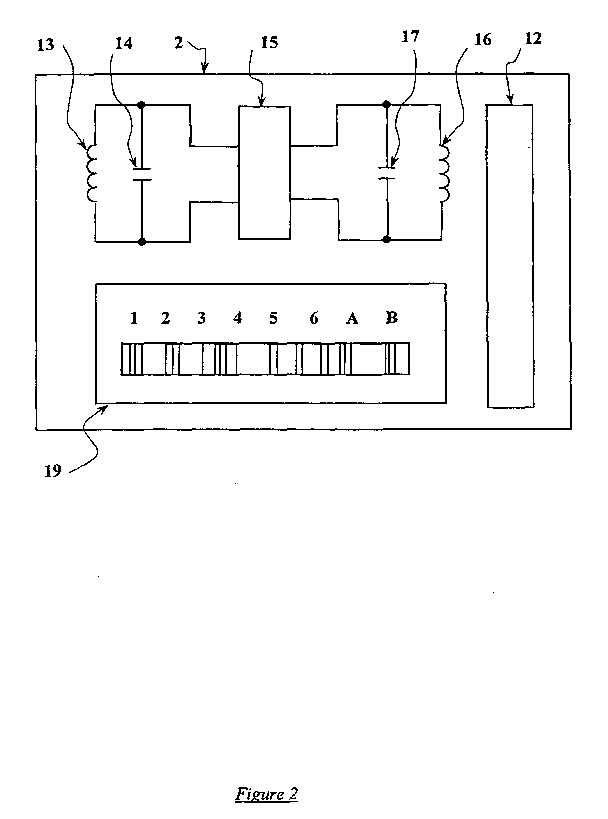

Some of the details which may be incorporated within a label for this application are shown in Figure 2. Such a label may contain printed information in alphanumeric or bar code form. In addition, the label may contain a magnetic material which may be used as described later as an indicator of the presence of such a label within an interrogation field. The label may also contain an electronic circuit which may be connected to an energising antenna and may also be connected to an communication antenna. The energising antenna may provide energy for activation of the microcircuit, as well as a one-way or two-way communication channel for the transmission of information. The electronic circuit may also be connected to a probing antenna which is useful for the indication of the presence or status of the label in a different kind of interrogation electromagnetic field.

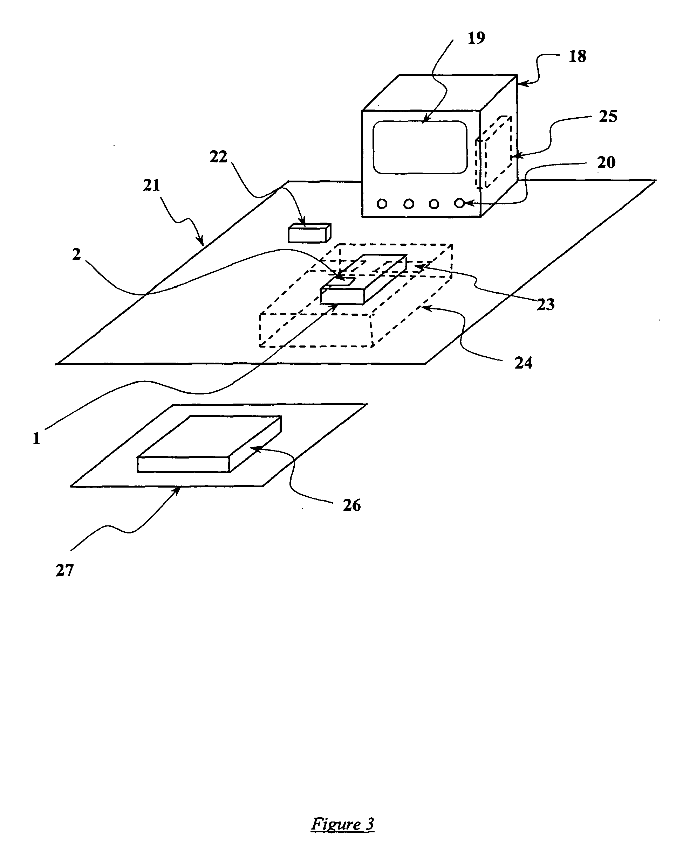

One of the possible ingredients of an overall system for object or document handling could be an operator console as illustrated in Figure 3. The console and associated interrogator may be used for either programming or reading the label. In this diagram the object carrying the label is placed in the electromagnetic field of an interrogator antenna which is connected to an interrogator which operates in conjunction with an operator system containing both display and controls. With the aid of such a unit the information of the label can be either read or programmed.

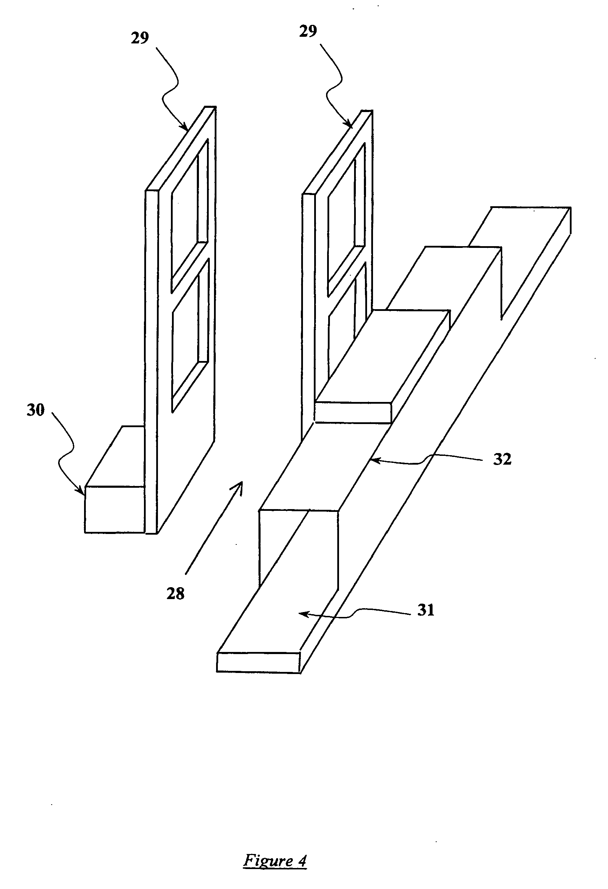

Another component of an overall object or documentation control system is illustrated in Figure 4. This diagram shows a pair of pedestal antennas between which objects are intended to be carried after they have been issued to authorised users. Electromagnetic fields created between the pedestal antennas interact with some aspects of the label to provide an indication of the label status. i.e. is whether the attached object is in the care of an identified user and may validly be removed from storage. The diagram also shows a possible electromagnetically screened bypass conveyor through which objects intending to be removed from the storage may be passed. In such a closed environment as is provided by the screened by pass conveyor, a more detailed evaluation of the status of the object may be carried out.

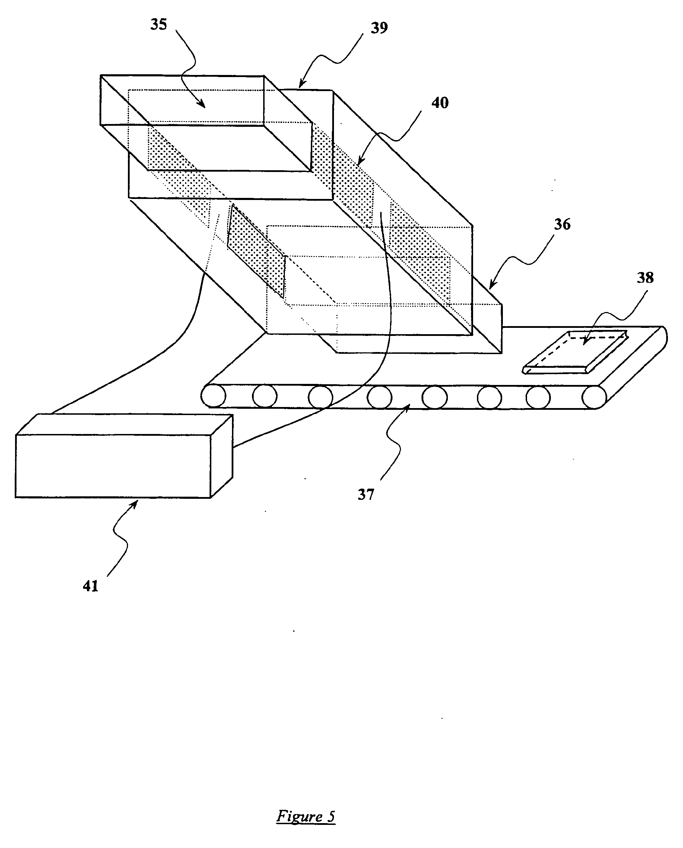

Finally an overall object or documentation management system may contain the return reading and sorting apparatus shown in Figure 5, wherein objects intending to be returned to storage may be passed by a chute into secure storage. In the process of passing through the chute the labels attached to objects are read and the objects may be de-associated with the users to whom they had first been issued.

It will be seen from the variety of operations described above that a variety of responses from the label is required to cover the performance required in the different interrogation contexts.

Firstly, as the label is required to provide a unique identification of the labelled object, it should be possible to cause the label to produce a many-bit reply upon straightforward interrogation. It should also be possible to program a label or book identity into the label when that label is first placed into service, and to lock at least part of that information in place so that it cannot be changed. That unalterable information thus becomes a permanent identifier of the object. It should also be possible to program and modify information within the label or in an associated data base as to its borrowing status and intended storage of the associated object.

In addition some of the information in the label may need to be programmed from time to time to indicate the borrowing status of the label and its intended destination. A further facility which the label should provide is that of raising an alarm when the object is taken into an unauthorised area. It is desirable that the alarm facility of the label operate at greater sensitivity than the simple data reading so that the volume of space in which the label will raise an alarm signal can be conveniently large. It is desirable that the alarm raising function of the label can be turned on and off by electromagnetic means so that validly checked out objects do not raise alarms when they are removed from the storage facility.

It may also be desirable to place within the label a means for generating with high sensitivity a signal which indicates whether or not the labelled object belongs to the classes of objects for which valid checkout is demanded.

The international application WO 97/22085 describes an electronic label adapted for repeated activation and deactivation using a semiconductor memory element. The label has a presence detecting means and a means for communicating with an interrogator which creates an interrogation field. The presence detecting means is enabled or disabled by the means for communicating.

According to one aspect of the present invention there is provided a control system for an object or document according to claim 1.

According to a further aspect of the present invention there is provided an electronic label suitable for use with a control system for an object or document according to claim 15.

As used herein status implies information concerning the object or document e.g. legitimately borrowed or not, where an object should be housed, who may have borrowed it, etc. A data base may contain for each object or document information in addition to status, e.g. detailed identifying information for the object or document. Condition as used herein implies presence detecting means enabled or disabled, alarm condition generating means enabled or not.

Preferred embodiments of the present invention will now be described with reference to the accompanying drawings wherein:
Figure 1 shows an object with an electronic label, and an interrogator with interrogator antennas;
Figure 2 shows a block diagram of an electronic label;
Figure 3 shows an object checkout station;
Figure 4 shows a user exit lane with pedestal antennas and object bypass conveyor;
Figure 5 shows a chute for object return;
Figure 6 shows a timing diagram for excitation and triggering a data reply from a label;
Figure 7 shows a timing diagram for a read, program, and verify operation for a label;
Figure 8 shows a timing diagram for exciting a label without a command and the label response;
Figure 9 shows a modulated theft mode backscatter signal with four bits per cycle;
Figure 10 shows an outline of an interrogator containing adaptive isolation;
Figure 11 shows resonance curves of single object label and of several coupled labels;
Figure 12 shows interrogation by a frequency hopping signal at If;
Figure 13 shows a block diagram of switchable resonance circuit using two coils;
Figure 14 shows resonance curves of that circuit in various modes;
Figure 15 shows a block diagram of switchable resonance circuit using one coil;
Figure 16 shows resonance curves of that circuit in various modes;
Figure 17 shows rectangular M-H curve;
Figure 18 shows the spectral response in a label employing a rectangular M-H curve magnetic material using a single excitation frequency and using two excitation frequencies;
Figure 19 shows an object in wrapping;
Figure 20 shows antennas and objects on a conveyor system;
Figure 21 shows an arrangement of antennas in which pairs have minimal coupling, and in which unused antennas are temporarily untuned and damped; and
Figure 22 shows a circuit for a baseband signal phase shifting and combining system.

Figure 1 shows an arrangement of items within an object and document management system in which an object **1** carries an electronic label **2** which is in the electromagnetic field of an interrogator transmit antenna **3** connected to an antenna which creates an interrogation electromagnetic field which can excite the label so that it generates one or more forms of reply signal which is received by a reply electromagnetic antenna **4.**

Both of the said antennas are connected to an electronic interrogator **5** which is responsible for the generation of one or more forms of interrogation signal in receiving and processing one or more forms of label reply. Interrogator **5** is connected to a control console **7** containing a display **8** and keyboard **9.** The keyboard may be used to place the interrogator in various modes of operation, and the display may be used to display information about the label reply.

The interrogator may also be connected to an alarm generator **6** which may provide an optical or audible signal indicating that the label within the object is in an alarm condition or may simply make a record of that fact.

The interrogator can also provide signals to a conveyor or sorting system which might control the movement of the object if it has been placed on some form of automatic conveying system.

The diagram of Figure 1 is intended to represent the general elements of different portions of an overall object and document management system in that in different parts of the system, different forms of interrogator, to be explained below, will be used, different forms of interrogation signal may be used, different forms of label reply may be used and the antenna structures may vary in response to the needs of providing a region within which objects can be hand carried, or a region within which objects may be automatically handled, and a region within which objects may be being withdrawn from, returned to, or handled within, the object storage facility.

The structure of a label suitable for an object and document management system is shown in Figure 2. The label **2** contains a labelled body preferably consisting of a thin flexible material on which a visible label **10** contains printed alphanumeric or bar coded information. The labelled body may also carry a magnetic strip **12** of high permeability material which is capable of indicating in the manner to be described below whether or not the label belongs to the class of objects for which secure handling is required.

The label may contain an energising antenna **13** which may be in the form of a planar coil and resonating capacitor **14** connected to microcircuit **15.** The microcircuit may contain a rectifier system which can extract, from the signal received by the energising and communication antenna electrical energy for powering the integrated circuit, and may also contain electronic signal receiving and generating circuits which are influenced by data stored within the microcircuit. The integrated circuit may also be connected to probing or reply antenna **16** which may be in the form of another printed coil and which may be connected to second resonating capacitor **17.**

A range of functions for the probing or reply antenna will be described later, but they may include, when the microcircuit is energised, the issuing of a label reply signal. They may also include, when the electromagnetic interrogation field is at too low a signal level or at inappropriate frequency for the energising of the microcircuit to occur at a level at which its data circuit functions are exercised, an opportunity for the label to disturb the interrogation electromagnetic field through the probing or reply antenna in such a way that the presence of the label becomes detectable by the interrogator.

When the interrogator generates appropriate forms of interrogation electromagnetic field, second or third order harmonics or mixing products of the frequencies within the interrogation electromagnetic field may be generated as a result of non-linear relationship of the magnetisation curve of the said soft magnetic strip.

Differing functions may be performed by the label in different contexts within the overall document or object management system. When a label is first attached by the document and object management authority to an object, a permanent identification code for that object may need to be programmed into the label. Alternatively a permanent identifier of the label may need to be associated with the object identification in the system data base.

In another aspect of operation of the overall system, an accredited borrower may wish to associate his own identification with the object identification in a system data base as being responsible for the management of that item and its potential removal from the secure site. At the same time portions of the information within the label may need to be reprogrammed that such an association has been made.

In another aspect of the operation of the management system, a labelled object may need to be removed by an accredited user from a secure site through a controlled pathway. As the object is carried or in other ways moved through that controlled pathway, the label may need to be interrogated to determine whether or not its removal is appropriate. For those labels for which removal is not appropriate, the interrogator signal may cause the label to generate a particular form of reply which when detected by the interrogator generates an alarm signal.

In yet another aspect of the object and document management system, borrowed objects may need to be returned to the secure site. When this is done, the label should be interrogated so that the object being returned is correctly identified and deleted from the list of objects which have been associated with the previously mentioned accredited user. Coincident with this operation, or perhaps later during the handling of the returned item before it again becomes available to accredited users, the label should be reprogrammed so that it is capable of generating an alarm upon an unauthorised removal.

Finally we mention that in an overall object and document management system, the subsequent handling of the document or object upon its return may involve a process in which the label is interrogated and the data base is consulted to determine to which portion of a single secure site or to which of several secure sites an object is to be routed.

An arrangement of components in which some of the operations described above can be performed is provided in Figure 3. The illustration is of a work station appropriate for an accredited user to take control of an object. In that figure, a console **18** containing a visual display **19** and operator controls **20** sits on a work table **21** which also accommodates a borrower reader **22** in which the borrower of an object inserts his electromagnetically readable credential so that he may be identified to the system. The object **1** to be borrowed containing the label **2** is placed above an electromagnetic antenna **23** placed within a field confinement metal well **24** below the work table **21,** and is connected to interrogator and programmer **24** which will generate the signals appropriate to reading the label data and changing that proportion of it which is appropriate to the borrowing process. The interrogator and programmer send signals to the system database, not shown, indicating the operations performed. When system diagnostics or operations more complex that the simple borrowing of the object are being performed, a keyboard **26** situated upon a sliding keyboard tray **27** may be brought into play.

In one preferred embodiment, energising and data communications to and from the label and also the issuing of an electromagnetic alarm code can all proceed via the energising antenna **13.** In another preferred embodiment the energising and data communications can proceed via the energising and communication antenna **13** and the electromagnetic alarm code can be affected by modifying the behaviour of probing or reply antenna **16.** In another embodiment energising of the label may proceed through energising antenna **13** with some part of the data communications proceeding via the second antenna **16.** In yet another preferred embodiment the soft magnetic strip **12** may be used to generate signals indicative of the presence of a label.

In different preferred embodiments, different communications frequencies may be used. In one preferred embodiment, communications and alarm signals may be confined to the vicinity of the 13.56 MHz ISM band. In another preferred embodiment the operations of the probing or reply antenna may occur in the commonly used EAS band surrounding 8.2 MHz. In another preferred embodiment the sensing of the soft magnetic strip may occur in the ultrasonic band of several tens of kilohertz. In yet another preferred embodiment energising, data communications and alarm signals may all be placed in the VLF band in the vicinity of 100 kHz. Each of these embodiments have advantages deriving from the choice of operating frequencies for the different functions. The use of antennas designed to operate at the 8.2 or 13.56 MHz bands allow economy of antenna and microcircuit manufacture. The use of the VLF band just above 100 kHz allows greater freedom in the choice of operating frequencies and provides a context in which those may be varied to allow for variations in the resonant frequencies of labels and their antennas with frequency. The use of the ultrasonic frequencies allows the use of fields which will significantly penetrate materials which may have been used to enclose labelled objects with a view to shielding the labels from the interrogating fields. Finally we mention that different embodiments may require the microcircuit to function in different ways in its generation of alarm signals.

In one embodiment the microcircuit will in the generation of an alarm signal operate at significantly lower voltages and hence lesser field strength than are required for data communications and programming. Such alarm signals may however still be generated by independent oscillators within the microcircuit. In other embodiments where the operating frequency is in VLF range, alarm signals may be generated in a phase coherent manner at frequencies which are related to the interrogation frequency, and narrow-band detection of those alarm signals within the interrogator may be employed. In still further embodiments, alarm signals may be generated by electromagnetic fields which are not strong enough, or at an inappropriate frequency, to energise the microcircuit into operation, but which can still interrogate one aspect of the state of the microcircuit via the probing or reply antenna. All of these features will be made more clear in the discussion of later figures.

For the authorised removal of objects which have been borrowed by accredited users, and the detection of attempts for the unauthorised removal of labelled objects, the object and document management system may contain apparatus as shown in Figure 4. In this Figure a walkway **28** passes between pedestal antennas **29** which generate with the aid of interrogator **30** an interrogation electromagnetic field which can interact with the label in a number of ways discussed below.

In one preferred embodiment, the interrogation electromagnetic field is within the 13.56 MHz ISM band and the alarm signal as generated occurs as a modulated or unmodulated set of sidebands, offset from that interrogation frequency by a frequency in the vicinity of 100 kHz. The offset frequency is derived from an independently generated oscillator within the label.

In another embodiment, the interrogation of the label is at a frequency in the vicinity of 100 kHz in the LF band. The alarm signal, if generated, can again be in the form of relatively close sidebands of that interrogation frequency, but the offset frequency in this case may be derived as a sub-multiple of the interrogation frequency. This method of operation has the benefit that the alarm signal frequency is accurately known and narrow-band detection techniques for the electromagnetic field of the alarm signal may be employed in the receiver of the interrogator.

In yet another embodiment of the detector for an alarm signal, the interrogator electromagnetic field may be swept over a band width of the order of 2 MHz centred on 8.2 MHz but at an amplitude sufficiently low for the circuits within the label to remain in their linear region of operation. In this case the alarm signal, if generated, can take the form of a narrow-band change in the impedance of the interrogation antenna which is attributable to the coupling between the interrogation antenna and the label antenna.

In yet another embodiment, the fields generated by the pedestal antennas can be in the low supersonic region in the vicinity of 30 kHz, and slightly different frequencies might be fed to the two pedestal antennas. The alarm signal might be generated as third-order mixing products of those two separate frequencies, or might be a third harmonic of one or another. Such an alarm signal is in this case generated by the non-linear magnetisation curve of the magnetic strip within the label. The intention in this case is to detect the passage of any of the objects or documents which belong to the secure installation, whether or not they have been validly checked out by an accredited user.

In the latter case, the manner in which accredited users may remove checked out materials from the secure installation is to make use of an auxiliary exit pathway for objects consisting of an object conveyor **31** of which the central portion is screened by screening tunnel **32.** Antenna systems within the screening tunnel may interrogate at differing frequencies, the multiple facilities provided within the label which can detect firstly that an object within the tunnel has not been metal wrapped, secondly that a security object is being removed and thirdly whether it has been validly booked out to an accredited user.

Discussion of the mechanisms whereby this occurs will be taken up in a later section.

Figure 5 shows aspects of the system by means of which objects or documents which have been issued to accredited borrowers may be returned to secure storage. Such objects are placed in the returned object entry aperture **35** of returned object slide **36** and exit there from on to returned object conveyor **37** which carries returned object **38** to temporary storage or immediate sortation. the returned object slide is surrounded by a metal screening enclosure **39** containing antenna bars **40** which in a preferred embodiment take the form of metal plates which lie adjacent to the edges of the returned object slide and extend from the front and end faces of the screening enclosure **39** towards the mid point of the edges of the returned object slide, each set of antenna bars having a gap at that centre point across which a connection to an interrogator **41** is made. In this embodiment, with appropriate phasing, a substantially uniform interrogation electromagnetic field may be created in the region through which the returned objects pass. In a preferred embodiment the identities of multiple objects simultaneously present within the antenna slide may be determined using the techniques subscribed in PCT AU 92/00143 or PCT AU/98/00017. Thus these returned objects may be deleted from the sections of the system data base recording their possession by a particular accredited user and reinserted in sections of the object or document data base describing objects in secure storage. At this time, or later, changes may be made to the data within the label integrated circuit so that it is moved from a disarmed to an armed condition, so that any unauthorised attempt at removal of the object may be detected.

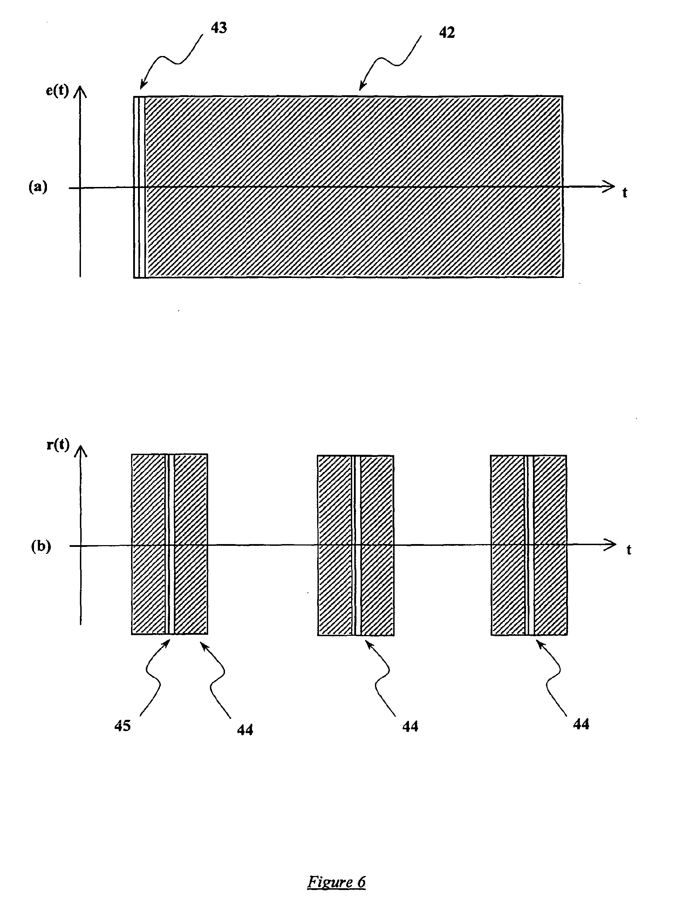

in one preferred embodiment of the object and documentation management system, the characteristics of an interrogation and label reply signal are shown in Figure 6. In the upper part of the figure the envelope of a excitation signal **42** which could be in a preferred embodiment at the frequency of 13.56 MHz is shown. At the commencement of that signal, a sequence of interruptions **43** to the envelope convey to the label a command which will cause the label to enter a reply mode in which the label replies intermittently with a reply signal of the form **44** shown in the lower part of the figure.

In a preferred embodiment, the reply can take the form of an independently generated sub-carrier signal independently generated within the microcircuit with frequency in the region of 325 kHz, frequency modulated with digital data at the rate of 4 sub-carrier cycles per digital data bit with frequencies of 275 kHz or 400 kHz for a digital zero and one respectively, and, as stated, with a fixed number of sub-carrier cycles rather than a fixed time interval allocated to each digital data bit. That sub-carrier signal can cause amplitude or phase modulation, or a mixture of both, of the interrogation signal circulating in the energising and communication antenna **13** of Figure 2, with the result that sidebands of the interrogation signal are generated and radiated by the label, the spacing of those sidebands from the interrogation signal being equal to the instantaneous value of the sub-carrier oscillator frequency

The separation between the repeated reply signals can be deliberately varied from time to time but even if constant within a label will naturally vary between labels as a result of manufacturing tolerances or of the response of the label to signal strength of the excitation signal. Within the data contained in the reply can be a fixed identity for the object and a number of data bits specifying the current status including whether the object has been validly assigned to an accredited user and whether the alarm generating feature of the microcircuit is within the armed or disarmed mode. Alarm status bits **45** are shown within the reply signal.

In another preferred embodiment the excitation signal could be in the vicinity of 100 kHz, the reply sub-carrier couid be generated by a frequency divider within the label so that it is a fraction of the interrogation signal frequency and can still be used to generate a reply in the form of close sidebands of the interrogation frequency with on this occasion a fixed time being allocated to transmission of each reply data bit rather than a fixed number of cycles.

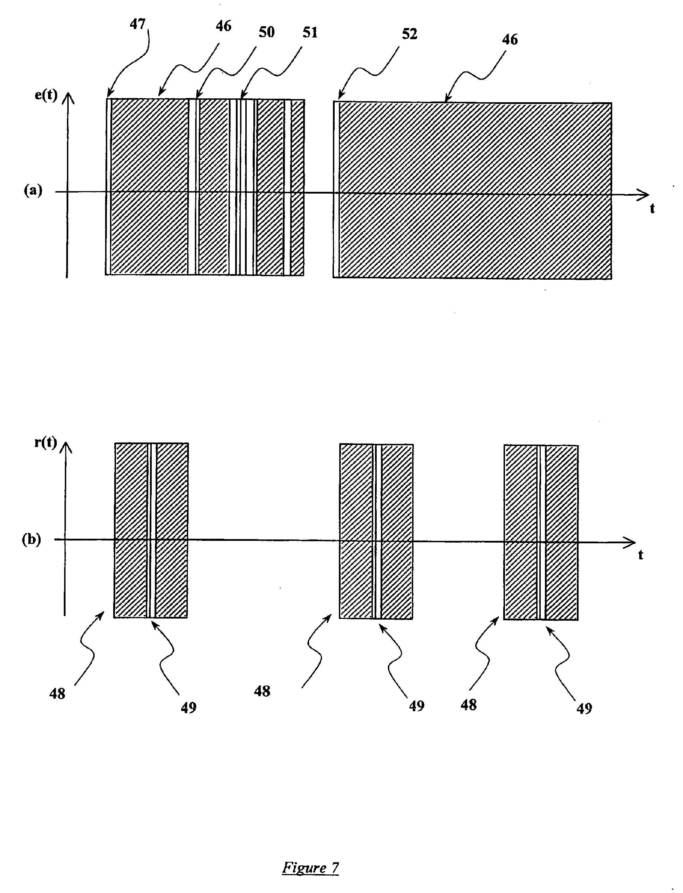

The sequence of operations whereby a label may be programmed with data is shown in Figure 7. Again the upper part of the figure shows the envelope of a combined energising and data transmission signal. The unmodulated portions **46** provide for transmission of energy to the label. Early in the sequence of operations a read command **47** is inserted into the energising signal for example by means of a sequence of interruptions of that signal. In response to this command, the label provides a reply signal **48** containing alarm status bits **49** as described previously. Shortly after the receipt of the label reply, the energising signal is arranged to issue to the label a program command 50 and shortly thereafter program data **51** both in the form of amplitude modulation of the energising signal. Following the completion of the program data transmission a second read command **52** may be issued after which an unmodulated energising signal **46** continues. During the currency of that energising signal the label continues to issue its repeated reply signals as described previously. It will be noted that once a program command **50** has been received the label enters a program mode in which it ceases replying. In different preferred embodiments the frequency of the energising signal may lie within the 13.56 MHz excitation band or may be a frequency in the low frequency band in the vicinity of 100 kHz. Reasons for choosing between these options will be canvassed later.

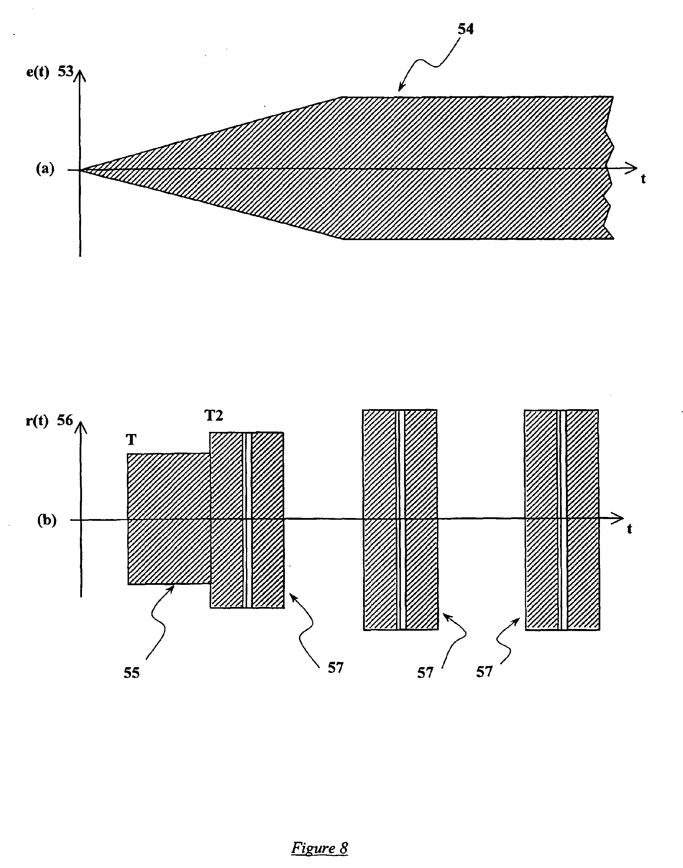

In the preceding discussion it will have been made clear that the question of whether or not a label is in an armed or disarmed mode for the generation of an alarm reply can be determined by examining particular bits within the label reply. Such a method of determining whether the label is raising an alarm or not is however not optimum, in that it requires the generation of a more elaborate reply than is required in the operations to be described shortly. The generation of that more elaborate reply requires on the part of the interrogation signal a greater signal strength and therefore a lesser interrogation range as the interrogation signal in unconfined environments are subject to electromagnetic compatibility regulations which limit their maximum strength. One of the methods whereby a significant increase in interrogation range for detecting whether or not a label is in an alarm armed condition is outlined in Figure 8.

This figure represents operations which in one preferred embodiment take place within a label which is in an armed condition and is attached to an object which is carried through the walkway **28** of Figure 4. In the upper part of the figure there is shown the envelope **53** of the effective excitation signal experienced by the label as it approaches and enters the space within the pedestal antennas **29** of Figure 4. As is indicated in the upper part of the figure the effective excitation envelope **54** grows from negligible amplitude as the object is carried into the interrogation field between the pedestal antennas. At the point marked as T in the diagram the effective excitation envelope **54** is sufficient to exceed the threshold for operation of that portion of the circuit within the label which is responsible for generating the alarm reply signal. In a preferred embodiment, at this excitation level only a portion of the circuits within the label are placed into operation. In consequence the power consumed by the label circuits is only that required for the generation of an alarm rather than for full reading and writing of data to and from label memory. Because the sub-carrier frequency of the alarm signal may be kept to a low value, the operating power and required operating voltage level are both lower than required for full label circuit operation with the result that the distance from the interrogator antennas at which the label is capable of raising alarm is maximised. The alarm signal **55** so generated is shown in the lower part of the diagram as one portion of an overall reply envelope r(t) **56.**

As the label is brought further within the regions scanned by the interrogation electromagnetic field in the exit walkway it may reach a condition in which the effective excitation signal exceeds a second threshold level T2 at which generation of a complete reply from the label becomes possible. If this condition occurs the label may issue its complete reply signal **57** at periodic intervals characteristic of that label.

The question of what happens when several labels are simultaneously present in the interrogation field arises. In the preferred embodiment being described here, the repeated reply signals, if they occur will not permanently overlap in time and the separate labels may be individually read. If several labels are in an alarmed mode, the relative simplicity of the alarm signal structure allows an alarm to be raised even if interference between alarm signals from different labels occurs because in the preferred embodiment the interrogator simply tests, in examining for an alarm condition, for a sufficient energy within a passband adjacent to the interrogation signal frequency without an attempt to extract detailed information, i.e. more than one binary digit, of information from the signals within that pass band.

In practical realisations of the approach depicted in Figure 8 the issue of distinguishing the relatively weak alarm signals generated by labels under the low level interrogation which this approach permits and other interfering signals which may intermittently arise from transmissions within the same band width as is allocated to the alarm signal sidebands arises. In such a case the interrogation signal may be periodically interrupted and the amplitude variation with respect to time of the detected alarm signal within the interrogator might be also investigated. When the presence and absence of the alarm signal matches the presence and absence of the interrogation signal for a sufficient number of repetitions of the interrogation signal, it is considered that the alarm signal is genuine and not one of stray transmissions from other users of the spectrum, and the interrogator raises the visible and audible alarm signals shown in the indicator **6** of Figure 1.

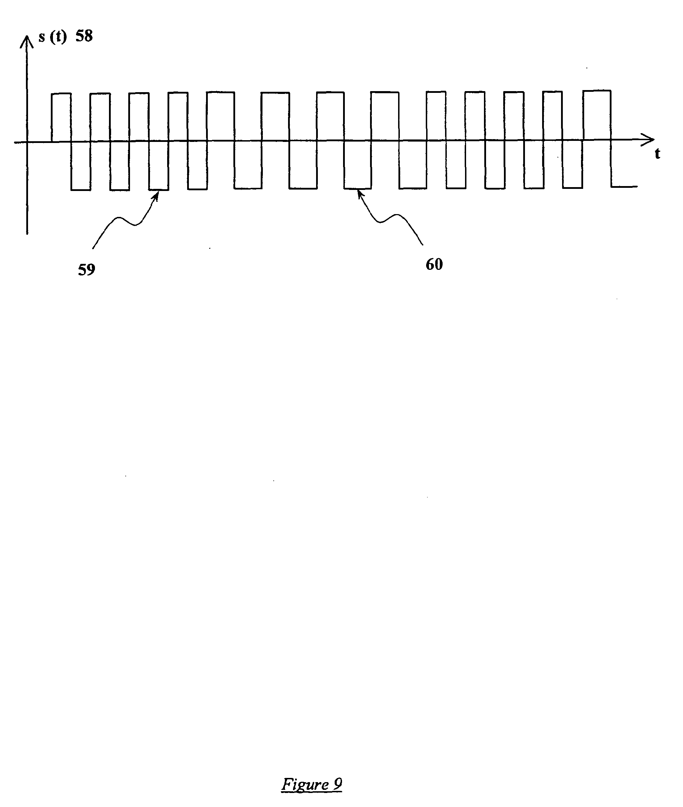

Further methods of distinguishing between label generated alarm signals and false alarm signals caused by other users of the spectrum are illustrated in Figure 9. In the preferred embodiment to which this figure relates the sub-carrier oscillator signal **58** shown in the figure as s(t) and involved in generating an alarm is frequency modulated with a regular pattern which in this embodiment varies in frequency and contains alternating high frequency portions **59** and lower frequency portions **60,** with a fixed number of cycles allocated to each frequency. Only when the perceived signal within the interrogator closely matches the modulation pattern is an alarm signal raised in the alarm indicator **6** of Figure 1. This particular form of modulation in a general alarm signal is unlikely to be generated by signals from other users of the spectrum and provides a degree of discrimination against such signals.

In one preferred embodiment the interrogation signal for labels in the exit walkway is at a frequency of 13.56 MHz and the alarm signal occupies a bandwidth from 8 kHz to 120 kHz, both above and below the interrogation signal frequency. The double sideband nature of the genuinely raised alarm signal provides a further means of discrimination against false triggers caused by other users of the spectrum. Such users are likely to produce false alarm signals within one or other of the sideband regions but not both, and when signals in only one sideband region are detected, an alarm is not raised.

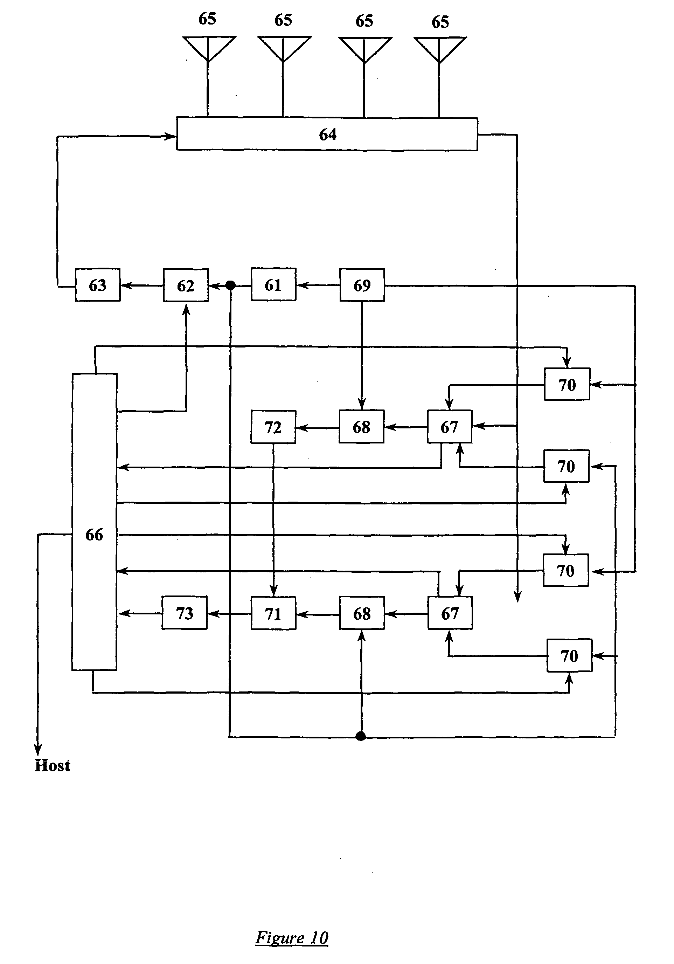

The structure of an interrogator system suitable for surveillance of the exit walkway **29** shown in Figure 4 is shown in block diagram form in Figure 10. The structure may be described as a multiple-antenna homodyne transmitter-receiver system with adaptive cancellation of stray coupling between pairs of transmitter and receiver antennas. Within the interrogator, signals originate in master oscillator **61** which may in one preferred embodiment operate at a frequency of 13.56 MHz and in another at a low frequency in the vicinity of 125 kHz. In both cases it is desirable to employ an oscillator of low phase noise. Signals from the master oscillator are amplitude modulated in modulator 62, amplified in power amplifier **63** and then passed to antenna multiplexer **64** and from there to a family of antenna coils **65.** The multiplexer operates under control of microcontroller **66** so that at one time only a single antenna coil is energised. Signals received by the interrogator antennas **65** from the label are also passed by the multiplexer with one antenna at a time to amplifier-detectors **67** of the interrogator receiver. Driving signals to the multiplexer are arranged so that at one time only a single transmitter antenna and a single receiver antenna are in use, the unused antennas being both detuned and damped so that any residual resonance is at a different frequency to that used for interrogation and at a low quality factor. The antennas are also designed, as will be explained later, so that only a minimum coupling between them exists, either because of the considerable separation between antennas on different sides of the walkway or because of the control of the spatial overlap in order to achieve zero mutual inductance.

The function of amplifier-detector units **67** is to provide low-noise amplification of modest gain but without saturation at signal levels which are encountered as a result of imperfect adjustment of the isolation between the interrogator and receiver antennas. As well as providing the amplified output signals to baseband mixers **68,** the amplifier-detector devices **67** also provide an indication of signal amplitude directly to the microcontroller **66.**

As is shown in the diagram, the amplifier-detector devices **67** receive their inputs not only from the antenna multiplexer but also receive second inputs which are derived directly from the master oscillator **61** and third inputs which are derived therefrom but after passing through controlled gain amplifiers **70** and possibly also quadrature phase shifter **69.** The controlled gain amplifiers receive control signals defining the amplifier gain from the microcontroller **66.** The intended function of the second and third inputs and the adjustment provided therefor is to enable cancellation of the direct and unwanted transmitter receiver coupling that occurs between pairs of antennas **65** and is manifested by the presence in the receiver output port of the multiplexer of signals directly derived from the master oscillator **61** without any interaction with the electronic label **2** of Figure 2.

Local oscillator signals for the baseband mixer 68 are derived in one case directly from the master oscillator **61** and in the other case via quadrature phase shifter **69.** The two separate receiver channels described above are provided so that all phases of the reply signal from the label at least one of the mixers **68** will have a strong output signal.

The base band output signals of the base band mixer **68** are combined in analog summing device **71** after one of them has received a further ninety degrees phase shift in quadrature phase shifter **72.** Further processing of the base band reply occurs within microcontroller **66** using digital signal processing techniques described in disclosures referred to earlier after the combined base band output signal has been converted to digital form an signal sampler **73.**

Advantages of the structure shown, particularly of the cancellation of unwanted signals from the multiplexer, are that overload of the mixers **68** is avoided and phase noise in the receiver chain deriving from phase noise in the master oscillator is minimised.

As will be described later, the functions of summing device **71** and quadrature phase shifter **72** may be merged into a single circuit of considerable simplicity.

In the operation of the system illustrated in Figure 4 for the detection of labels which are being removed from secure storage without those objects being assigned to an accredited user, note must be taken of the fact that for objects and documents placed in close proximity there may be an interaction between labels of the type outlined in Figure 2 which may modify their sensitivity. The interaction of concern is that of mutual inductance between the energising antennas **13** of different labels if they are placed in close proximity. When the labels are placed close and directly over one another, the mutual inductance may be regarded as positive. If the labels are close but the overlap is incomplete, the mutual inductance may be negative and generally is of a lesser magnitude.

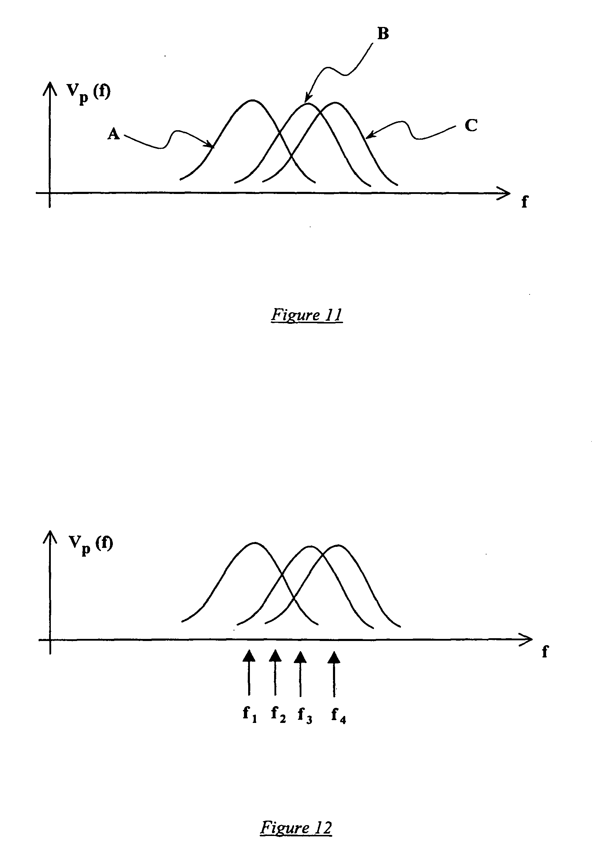

The impact of these phenomena is illustrated in Figure 11 which shows, for a fixed amplitude of energising field, the parallel resonant voltage of the tuned circuit involving the energising antenna **13** of one label and its tuning capacitor **14** also of that label when various combinations of other labels are placed in close proximity. Curve A shows the resonant voltage for several labels with positive mutual inductance. Curve B shows the resonant voltage for a single label and curve C shows the resonant voltage for two labels with negative mutual inductance. It is clear that if the interrogation frequency is chosen to achieve maximum sensitivity for a single label, then there is a reduction of sensitivity when other labels are placed in close proximity.

A remedy for this problem is shown in Figure 12. It is not necessary that all interrogations to detect when labels within the walkway **28** of Figure 4 are in an alarm condition take place at the same interrogation frequency. Since interrogations need only be of limited duration, perhaps of the order of half a millisecond, to determine when the label is in an alarm condition, it is practicable, depending upon electromagnetic compatibility regulations, to perform successive interrogations separately over a range of frequencies such as those shown as f₁ to f₄ in Figure 12. With a sufficient range of interrogation frequencies the effects of label mutual coupling are clearly accommodated. In a preferred embodiment of the invention the interrogation for the detection of alarm condition can take place in the low frequency range in the vicinity of 125 kHz in which electromagnetic compatibility regulations are tolerant of the use of a range of interrogation frequencies.

In the method of detection of alarm conditions in labels which has been outlined in discussion relating to Figures 8, 9, 10, 11 and 12, alarm signals take the form of detection of signals from the label at frequencies other than the interrogation frequency. In another preferred embodiment of the invention, alarm signals can be derived from the perturbation in either interrogator antenna impedance or interrogator antenna cross coupling which derives from currents circulating within the label at the interrogation frequency. In such a case a label, when in an armed condition, should have a high quality factor resonance somewhere in a frequency band which is scanned by the interrogator in order to detect a narrow band perturbation in the interrogator antenna properties mentioned above.

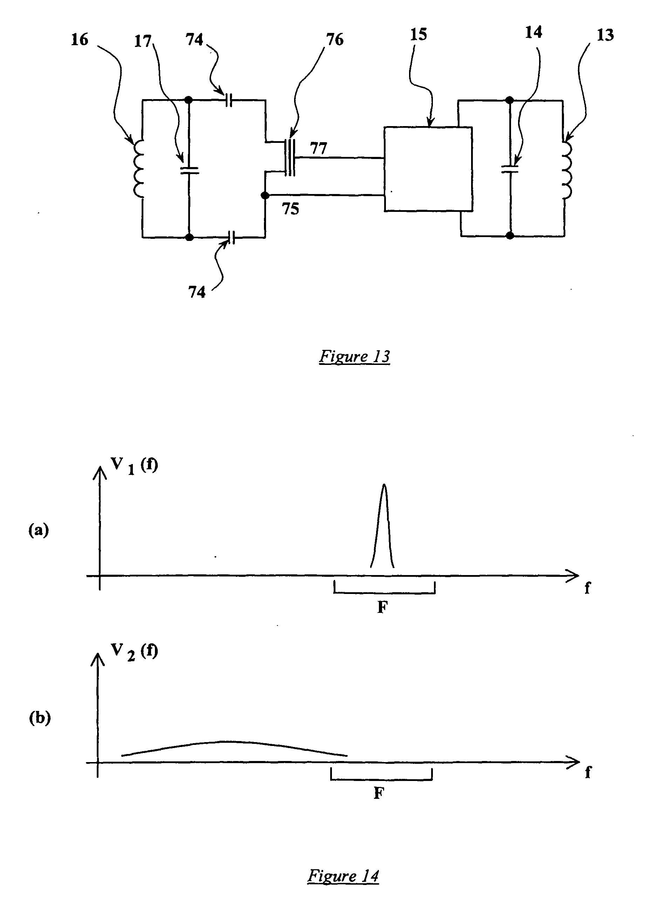

In a preferred embodiment of the invention aspects of the label circuit which employ this method of alarm triggering and in which the label may be moved freely between the armed and disarmed state are shown in Figure 13. In this embodiment the integrated circuit **15** is powered by the parallel resonant voltage developed by energising antenna **13** and resonating capacitor **14** as shown both here and in Figure 2. The facility for raising an alarm is contained within the properties of the resonant circuit formed by probing or reply antenna **16,** and its resonating capacitor **17.** The properties of the tuned circuit formed by those two elements are modified by the connection via series capacitors **74** of the programmable transistor **75** with floating gate **76** connected to microcircuit **15.** By the usual operations for programming an eeprom memory transistor, charge on the floating gate may be modified so that in quiescent state the floating gate sits at either a low, near ground potential or at an elevated potential sufficient to turn on the memory transistor even in the absence of a driving voltage on the control gate **77.**

The operations of this circuit are illustrated in Figure 14. In the upper part of the diagram is shown a graph versus probing frequency of the parallel voltage across the resonant circuit formed by elements **16** and **17** when the floating gate is at a low potential. This narrow band resonance is easily detected by the interrogator as a previously mentioned perturbation of the impedance or coupling properties between the interrogator antennas. This effect is as illustrated in the upper part of the diagram. The label is then effectively in an armed state. It is noted that the behaviour occurs when the probing signals of the interrogator are within a frequency range and at an amplitude level sufficiently low that the microcircuit **15** remains substantially un-energised.

In the lower part of the diagram is shown the behaviour of that resonance curve when either the floating gate or the control gate has reached an elevated potential. It will be noted that the resonance frequency has been shifted to a lower value and the quality factor very substantially reduced so that the narrow band resonance in the frequency range F scanned by the interrogator is absent. The label is then effectively in an unarmed state.

It will be noted that in this preferred embodiment the probing antenna and energising antenna for the microcircuit are distinct elements. It is preferred that the probing antenna be made as to occupy as much area is practical of the label 2. The energising antenna **13** can be smaller as in the operation of the overall object and document control systems it is only subject to close range interrogation. It is preferred that it be resonant at a frequency sufficiently different from the probing antenna that there be no reduction in its effectiveness in relation to the probing field. It is not necessary to pursue the extremes of zero mutual inductance as a study of the phase relationships between residual currents that might flow at the probing frequency in the energising antenna suggests that they are not threatening to the functioning of the probing antenna.

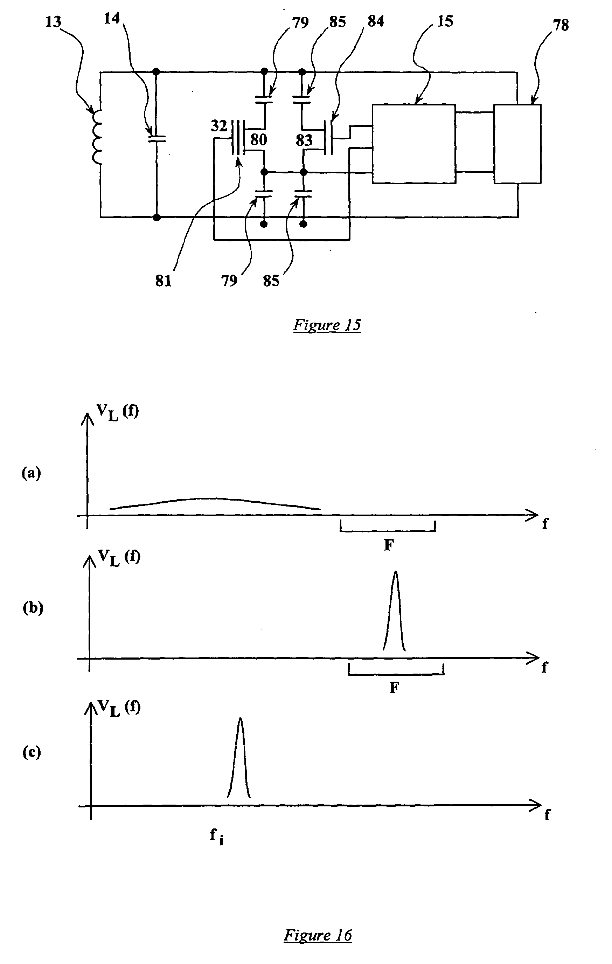

Figure 15 illustrates the construction of a different preferred embodiment of a label in which the energising antenna **13** and its resonating capacitor **14** perform the requirement of both energising the microcircuit 15 and serving as a label probing antenna. In this embodiment under appropriate conditions, the parallel resonant voltage across the tuned circuit formed by inductance **13** and resonating capacitor **14** is rectified in rectifier system **78** and provided to microcircuit **15** as its d.c. supply voltage. In this condition the microcircuit is capable of providing a modulation of the tuned circuit voltage and hence a backscatter reply from the label to the interrogator by operation of the control gate **84** of modulating transistor **83** which is connected via series capacitors **85** to the aforementioned tuned circuit. In this figure the floating gate transistor **80** is connected to the tuned circuit formed by label antenna **13** and resonating capacitor **14** by coupling capacitors **79** of adequate size.

When energising signals are too low for operation of the rectifier, however, the tuned circuit formed by elements **13** and **14,** depending upon the condition of floating gate **81,** behaves in the two ways which were described in relation to Figure 14 for the probing antenna **16,** and the label may thus be placed in an armed or unarmed state. When however energising signals are sufficiently large the modulating transistor **83** can through operation of its control gate and its floating gate, be made to exhibit a substantially smaller impedance with the result that the antenna **13** and its resonating capacitor **14** retain a reasonably high quality factor but the phase of the circulating current is switched in the modulating process between values which will be perceived the interrogator receiver as arising from modulation of the interrogation frequency firstly to perform a sub-carrier signal, and secondly if data transmission is required, modulation of that sub-carrier to carry data.

The behaviour of the circuit of Figure 15 in the various modes described above is illustrated in Figure 16. For low amplitude signals and when the floating gate **81** of transistor 80, is in a high state the behaviour of the resonant circuit in terms of its parallel resonant voltage for a fixed amplitude of energising field is shown in diagram (a) of Figure 16, in which diagram the frequency band scanned by the interrogator for detecting alarm signals is shown as F, and a narrow band tuned circuit is not present in the label and no alarm is raised by the interrogator. When, however, the floating gate is in low state the behaviour of the said tuned circuit is shown in part (b) of Figure 16 and an alarm condition is raised by the scanning of the interrogator through the same frequency range F.

When, however, the energising frequency is of a sufficient amplitude and at an appropriate frequency fᵢ, the effective resonance curve of the elements **13** and **14** is as shown in part (c) of the figure and the label can act as a backscatter label responding with digital data.

As in different conditions of the floating gate the circuit may exhibit different resonant frequencies, energising at multiple frequencies in the early stages of an interrogation with a view to putting the circuit in an energised large signal mode and changing the state of the floating gate may be employed. As that type of interrogation is at close range or in an enclosed environment this is easily accomplished.

In the design of object and document control system note should be taken of the fact that various attempts to defeat the alarm function so that documents may be removed from secure storage in an authorised way may be made. It is therefore desirable to include within the label a function which returns a signal indicating that a label is present even when attempts are made to interfere with the electromagnetic interrogation process. It is for such a purpose that the soft magnetic strip **12** shown in Figure 2 is provided.

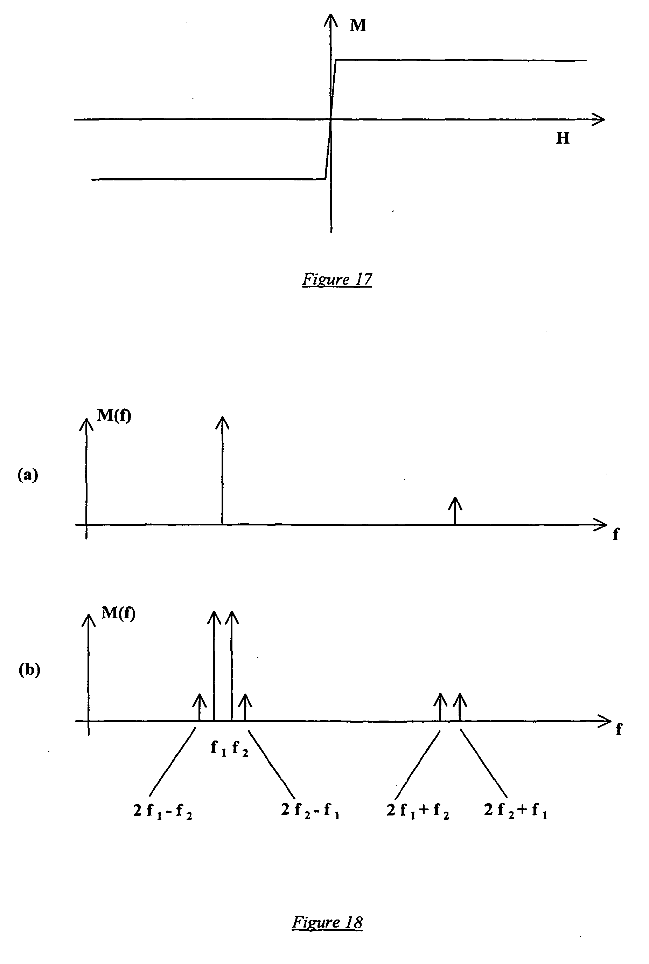

The magnetisation curve of such a soft magnetic strip is shown in Figure 17. The vertical axis of that graph represents the magnetisation in amps per metre of the material while the horizontal axis H represents the internal magnetic field in amps per metre. As the material is in the form of a thin strip, the demagnetising factor for fields in the plane of the strip is very small and the horizontal axis of Figure 17 may be regarded also as approximately the externally applied field.

The response of various frequency components of the magnetisation to a sinusoidal applied field at frequency fᵢ is shown in part (a) of Figure 18 and the response to an applied field consisting of two different frequency components f₁ and f₂ is shown in part (b) of Figure 18. The symmetry of Figure 17 is such that odd harmonics will be generated so Figure 18 shows the third harmonic of the single interrogation frequency fᵢ or third order mixing products when two frequencies f₁ and f₂ are applied.

If the interrogator is designed to detect the presence of third harmonic or third order mixing products an indication of a label presence may be achieved. It is notable that some of the third order mixing products occur in the vicinity of, but distinct from, the initial interrogation frequencies f₁ and f₂. The use of two separate interrogation frequencies is useful if it is desired to seek to confine the region of space scanned for presence of such labels. If the antennas on either side of the walkway **28** shown in Figure 4 generate fields at distinct frequencies it is only in the region of overlap of these fields that an indication of label presence will be provided. This fact helps to more closely define the region of space in which labels are being sought.

This indication of label presence is of benefit in the embodiment of the invention illustrated in Figure 4 in which objects are intended to exit the scanned area only along conveyor **31** through screening tunnel **32** shown in that figure. In this case an alarm signal will be raised whenever an object carrying a presence indicating label of the type illustrated in Figure 2 is carried through the walkway **28** of Figure 4, whether or not such object has been allocated to an accredited user of the facility. The alarm signal is intended to ensure that all objects which exit the facility pass through the more secure investigating procedures that can take place in the screening tunnel and which will be described further below.

The reason for proceeding in this way is that one of the techniques for attempting to defeat an electromagnetic alarm system in a label attached to objects is by wrapping those objects in a metallic conductor, most commonly aluminium foil. The effectiveness of such foil in the screening of electromagnetic fields from the label within depends upon the skin depth for any currents flowing in the foil, which depth in turn depends upon the material conductivity and the interrogation frequency. Calculations show that for aluminium foil of thickness 200µm the interrogation frequency of for which the skin depth is equal to that thickness is 158 kHz. These calculations suggest that the suitable interrogation frequency for successful operation of the presence indicating facility provided by the soft magnetic strip **12** of Figure 2 is in the low supersonic region. In one preferred embodiment of the invention, the antenna systems of Figure 4 would be operated in that frequency range, perhaps at 30 kHz.

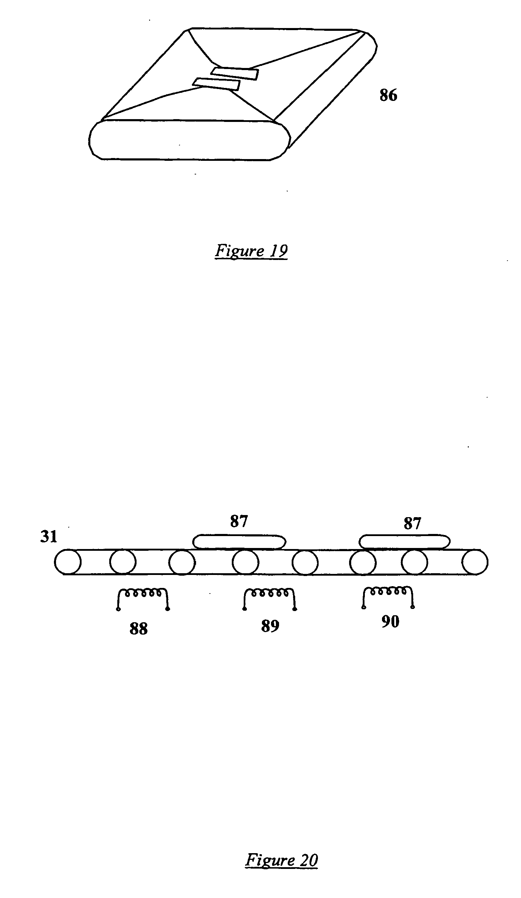

Figure 19 is intended to represent an object **86,** perhaps a book, wrapped in some material which could be aluminium foil.

In the preferred embodiment of the document and object control system being discussed here, operations within the screening tunnel **32** of Figure 4 are illustrated in Figure 20. This diagram shows two possibly wrapped objects **87** being passed along conveyor **31** through a screening tunnel. Measures such as object tumbling or intermittent driving of conveyor sections within the screening tunnel ensure that objects are separated so that they may be probed separately by various electromagnetic antennas.

One such antenna **88** detects the presence of substantial metallic conductivity within an object by the method of detection of detuning of a resonant circuit of which the inductor forming the antenna is a part and is adjacent to the conveyor. Objects so detected are presumed to have been foiled wrapped and are diverted to storage instead of being allowed to exit from the conveyor system.

Another antenna **89** connected to an interrogator and employing principles discussed heretofore but working at close range detects the presence of the soft magnetic strip **12** of Figure 2 and ensures that objects without such foil are diverted to storage, as they are considered to be foreign to the storage facility or to have had their electromagnetic labels removed.

Yet another antenna **90** connected to an interrogator and employing principles discussed heretofore provides excitation which can test whether a label is in an alarmed state and diverts to storage objects which have labels in that state.

In this way, only separated objects with working labels which are in an unalarmed state are allowed to exit the transfer tunnel to the outside of the storage facility.

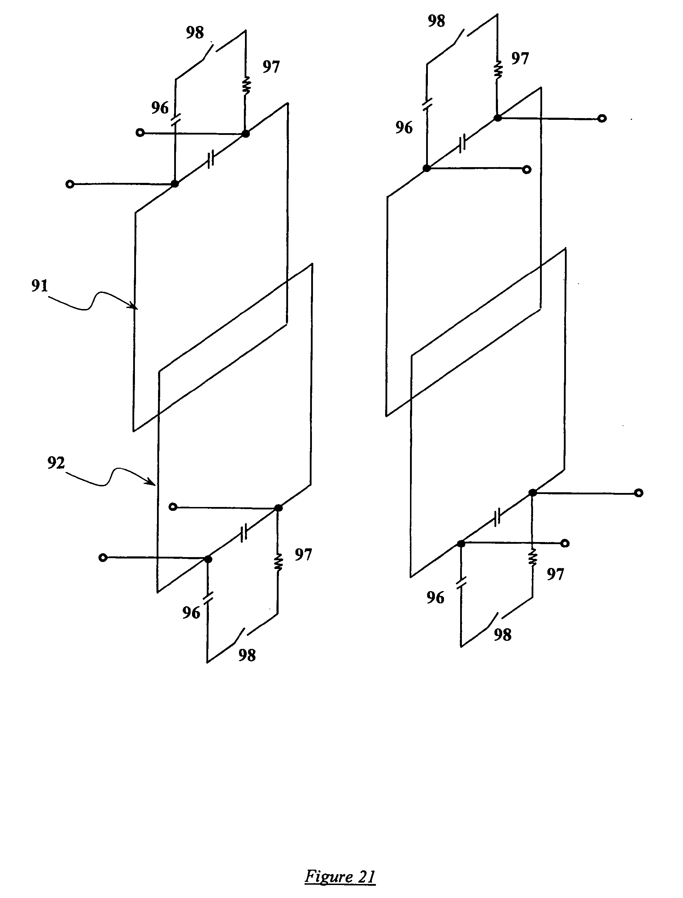

In the design of the multiple antenna system shown in Figure 4 for the detection of the alarmed or unalarmed state of electronic labels an important consideration is the minimisation of noise in the interrogator receiver which can arise from direct coupling thereto of phase noise present in the relatively strong interrogation signal. In a preferred embodiment, such minimisation is accomplished by two measures shown in Figure 21. As that diagram shows, antenna coils **91** and **92** which are adjacent are arranged to overlap slightly so that approximately zero mutual inductance occurs between them. The antenna coils may have grounded metal separating them to minimise coupling by electrostatic fields.

In addition, capacitors **96,** switches **98** and possibly resistors **97** are placed across the antenna coils, and the switches are operated so that any coil not used as either transmitter or receiver of the interrogator at one time is both mistuned and damped. In this way, isolation between a transmitter and a receiver coil can be adjusted so that it is not affected by the positioning or tuning of those other coils, and low noise in the receiver of the interrogator can be reliably achieved for all combinations of transmitter and receiver antennas exercised by the multiplexer **64** of Figure **10****.**

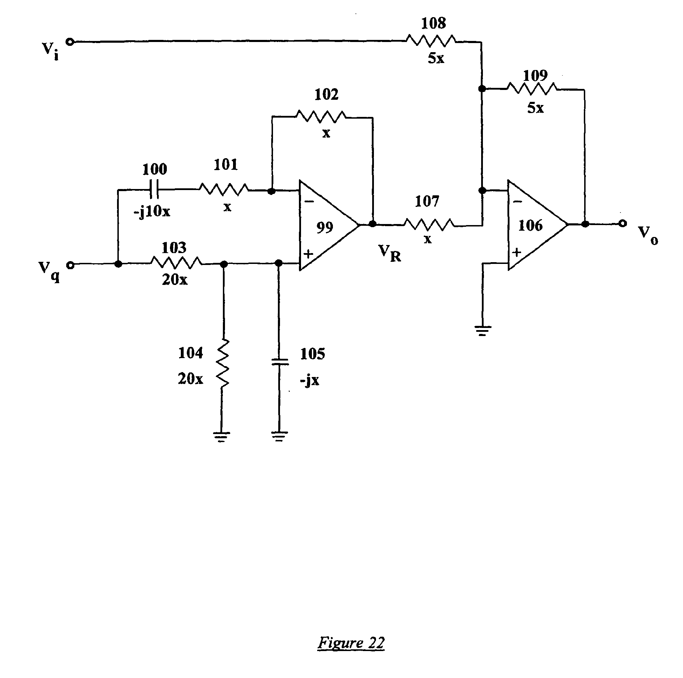

As indicated in discussion relating to Figure 10, one preferred form of the interrogator requires the summation in signal summer **71** of in phase and quadrature channel signals one of them having been shifted in phase by 90 degrees in quadrature phase shifter **72.** The circuit diagram whereby these operations may be accomplished is provided in Figure 22. This figure shows in phase and quadrature inputs Vᵢ and V_{q} respectively, intermediate output signal Vₛ and combined output signal Vₒ which would be delivered to signal sampling system **73** of Figure 10. Quadrature phase shift of signal V_{q} with substantially uniform frequency response and substantially constant 90 degrees phase shift over the pass band covering the frequency shift keyed reply to produce the scaled intermediate output signal Vₛ is accomplished by operational amplifier **99** and resistors **101, 102, 103** and **104** and capacitors **100** and **105.** This result is achieved by taking the scaled difference of two signals, one leading and one lagging the input signal V_{q} by a little less than 90 degrees to produce the intermediate output signal Vₛ. The amplitude of the gain from V_{q} to Vₛ is about 1/5. That intermediate output is then combined with the in-phase signal Vᵢ in operational amplifier **106** and resistors **107, 108** and **109,** the scale factors being adjusted to compensate for the factor of five attenuation in producing Vₛ from V_{q}.

Making the approximation that the circuit of Figure 22 produces a frequency independent 90 degrees phase shift at constant amplitude analysis may show that for a master oscillator signal of cos(ω_{c}t) which is used both for the transmitter signal and for the local oscillator signal in the receiver, and a signal received from the label of cos(ωₘt) cos(ω_{c}t +φ), the signal presented to the signal sampling system is ½ G cos(ωₘt + φ), where G is the gain of the receiver chain including the preamplifiers **67** and the mixers **68** of Figure 10, and the phase shifting signal summing circuit of Figure 22.

It may be seen that a non-zero amplitude received signal is received for all phase angles φ of the reply relative to the transmitted signal, albeit with some distortion equivalent to the taking of the Hilbert transform when the received signal is in quadrature with the master oscillator signal. The said distortion is not sufficient in practice to prevent the correct decoding of the reply signals when either frequency or phase shift modulation of the sub-carrier signal developed within the electronic label is in employed.

## Claims

1. A control system for an object (1) or document, said system including:
an electronic label (2); and an interrogator (5) for communicating with said label (2); said interrogator (5) being able to create an interrogation field, said label (2) having first presence detecting means (16,17) and means for communicating (13,14) with said interrogator (5), said presence detecting means (16,17) being able to provide an indication of the presence of said label (2) within the interrogation field, wherein detecting presence of said label (2) is interpreted as an alarm condition, wherein said first presence detecting means (16,17) is enabled or disabled by said means for communicating (13,14),
**characterized in that** said first presence detecting means (16,17) operates at an interrogation signal level that is lower than the signal level for energising the means (13,14) for communicating and **in that** said first presence detecting means (16,17) and said means (13,14) for communicating operate in different frequency bands.

2. A control system according to claim 1 wherein said label (2) includes means for recording an alarm condition.

3. A control system according to claim 1 or 2 wherein said label (2) includes means for generating an alarm signal.

4. A control system according to claim 1 wherein detecting presence of said label (2), or an alarm condition of said label (2), or an alarm signal from said label (2) raises an alarm.

5. A control system according to claim 1 wherein said label (2) includes second presence detecting means (12).

6. A control system according to claim 5 wherein said second presence detecting means (12) includes a soft magnetic strip.

7. A control system according to claim 5 wherein said second presence detecting means (12) cannot be disabled.

8. A control system according to claim 5 wherein said first presence detecting means (16,17) and said second presence detecting means (12) are energized in different frequency bands.

9. A control system according to claim 3 wherein said alarm signal is a single bit signal generated by modulating a carrier of said interrogator (5) thereby operating at a lesser power than is required for multiple bit communication.

10. A control system according to claim 1 wherein said label (2) operates in a first mode at a first interrogation signal level, and in a second mode at a second and higher interrogation signal level.

11. A control system according to claim 2 wherein said alarm condition is detected by said interrogator (5) by a test of energy information content within a sideband of an interrogation signal.

12. A control system according to claim 2 wherein said alarm condition is detected by independent examination within said interrogator (5) of an upper and lower sideband of an interrogation signal.

13. A control system according to claim 1 including an electronically scanned walkway (28) and a screened bypass chute for passage of labeled objects, wherein said control system includes means within the bypass chute for confirming that each object carries two independent forms of electronic label.

14. A control system according to claim 1 including an electronically scanned walkway (28) and a screened bypass chute for passage of labeled objects, wherein said control system includes means for evaluating label condition in the bypass chute, said means for evaluating including examination of two independent presence detecting means.

15. An electronic label (2) suitable for use with a control system for an object or document, said label (2) having presence detecting means (16,17) and means (13,14) for communicating with an interrogator (5), said interrogator (5) being able to create an interrogation field, said presence detecting means (16,17) being able to provide an indication of the presence of said label (2) within the interrogation field, wherein said presence detecting means (16,17) is enabled or disabled by said means (13,14) for communicating,
**characterized in that** said presence detecting means (16,17) operates at an interrogation signal level that is lower than the signal level for energising the means (13,14) for communicating and **in that** said presence detecting means (16,17) and said means (13,14) for communicating operate in different frequency bands.

## Patentansprüche

1. Ein Kontrollsystem für ein Objekt (1) oder Dokument, wobei das besagte System folgende Teile umfaßt:
Ein elektronisches Label (2) und ein Abfragegerät (5) für die Kommunikation mit dem besagten Label (2), wobei das besagte Abfragegerät (5) in der Lage ist, ein Abfragefeld zu schaffen, wobei das besagte Label (2) erste Mittel für das Entdecken des Vorhandenseins (16, 17) und Mittel für die Kommunikation (13, 14) mit dem besagten Abfragegerät (5) hat, wobei die besagten Mittel für das Entdecken des Vorhandenseins (16, 17) in der Lage sind, eine Angabe über das Vorhandensein des besagten Labels (2) im Abfragefeld zu machen, wobei das Entdecken des Vorhandenseins des besagten Labels (2) als Alarmzustand ausgelegt wird, wobei die besagten ersten Mittel für das Entdecken des Vorhandenseins (16, 17) durch die besagten Mittel für die Kommunikation (13, 14) aktiviert oder entaktiviert werden,
**dadurch gekennzeichnet, daß** die ersten Mittel für das Entdecken des Vorhandenseins (16, 17) auf Abfragesignalebene funktionieren, die unter der Signalebene für die Aktivierung der Mittel (13, 14) für die Kommunikation liegt, und **dadurch**, daß die besagten ersten Mittel für das Entdecken des Vorhandenseins (16, 17) und die besagten Mittel (13, 14) für die Kommunikation auf verschiedenen Frequenzbändern funktionieren.

2. Ein Kontrollsystem nach Anspruch 1, **dadurch gekennzeichnet, daß** das besagte Label (2) Mittel für die Aufzeichnung eines Alarmzustands einschließt.

3. Ein Kontrollsystem nach einem einem beliebigen der vorstehenden Ansprüche 1 oder 2, **dadurch gekennzeichnet, daß** das besagte Label (2) Mittel zum Generieren eines Alarmsignals umfaßt.

4. Ein Kontrollsystem nach Anspruch 1, **dadurch gekennzeichnet, daß** das Entdecken des Vorhandenseins des besagten Labels (2) oder ein Alarmzustand des besagten Labels (2) oder ein Alarmsignal von besagtem Label (2) einen Alarm auslöst.

5. Ein Kontrollsystem nach Anspruch 1, **dadurch gekennzeichnet, daß** das besagte Label (2) zweite Mittel für das Entdecken des Vorhandenseins (12) umfaßt.

6. Ein Kontrollsystem nach Anspruch 5, **dadurch gekennzeichnet, daß** die zweiten Mittel für das Entdecken des Vorhandenseins (12) einen weichen magnetischen Streifen umfassen.

7. Ein Kontrollsystem nach Anspruch 5, **dadurch gekennzeichnet, daß** die zweiten Mittel für das Entdecken des Vorhandenseins (12) nicht entaktiviert werden können.

8. Ein Kontrollsystem nach Anspruch 5, **dadurch gekennzeichnet, daß** die ersten Mittel für das Entdecken des Vorhandenseins (16, 17) und die besagten zweiten Mittel für das Entdecken des Vorhandenseins (12) auf verschiedenen Frequenzbändern aktiviert werden.

9. Ein Kontrollsystem nach Anspruch 3, **dadurch gekennzeichnet, daß** das besagte Alarmsignal ein Signal mit einem Bit ist, das durch das Modulieren eines Trägers des besagten Abfragegeräts (5) generiert wird und daher bei geringerer Leistung arbeitet, als für die Kommunikation mit mehreren Bits erforderlich ist.

10. Ein Kontrollsystem nach Anspruch 1, **dadurch gekennzeichnet, daß** das besagte Label (2) in einem ersten Modus auf einer ersten Abfragesignalebene und in einem zweiten Modus auf einer zweiten und höheren Abfragesignalebene arbeitet.

11. Ein Kontrollsystem nach Anspruch 2, **dadurch gekennzeichnet, daß** der besagte Alarmzustand von besagtem Abfragegerät (5) durch einen Test des Energieinformationsinhalts in einem Seitenband eines Abfragesignals entdeckt wird.

12. Ein Kontrollsystem nach Anspruch 2, **dadurch gekennzeichnet, daß** der besagte Alarmzustand durch eine unabhängige Untersuchung eines höheren oder niedrigeren Seitenbands eines Abfragesignals im besagten Abfragegerät (5) entdeckt wird.

13. Ein Kontrollsystem nach Anspruch 1 mit einem elektronisch gescannten Weg (28) und einem überwachten Bypass-Abfall für den Durchgang von Objekten mit Labels, **dadurch gekennzeichnet, daß** das besagte Kontrollsystem Mittel im Bypass-Abfall zur Bestätigung dessen umfaßt, daß jedes Objekt zwei unabhängige Formen eines elektronischen Labels trägt.

14. Ein Kontrollsystem nach Anspruch 1 mit einem elektronisch gescannten Weg (28) und einem überwachten Bypass-Abfall für den Durchgang von Objekten mit Labels, **dadurch gekennzeichnet, daß** das besagte Kontrollsystem Mittel zur Bewertung des Label-Zustands im Bypass-Abfall umfaßt, wobei das besagte Mittel zur Bewertung die Untersuchung von zwei unabhängigen Mitteln für das Entdecken des Vorhandenseins umfaßt.

15. Ein elektronisches Label (2), das für den Einsatz mit einem Kontrollsystem für ein Objekt oder Dokument geeignet ist, wobei das besagte Label (2) Mittel für das Entdecken des Vorhandenseins (16, 17) und Mittel für die Kommunikation (13, 14) mit einem Abfragegerät (5) hat, wobei das besagte Abfragegerät (5) in der Lage ist, ein Abfragefeld zu schaffen, wobei die besagten Mittel für das Entdecken des Vorhandenseins (16, 17) in der Lage sind, eine Angabe über das Vorhandensein des besagten Labels (2) im Abfragefeld zu geben, wobei die besagten Mittel für das Entdecken des Vorhandenseins (16, 17) von den besagten Mitteln für die Kommunikation (13, 14) aktiviert oder entaktiviert werden,
**dadurch gekennzeichnet, daß** die besagten Mittel für das Entdecken des Vorhandenseins (16, 17) auf einer Abfragesignalebene arbeiten, die niedriger als die Signalebene für das Aktivieren der Mittel für die Kommunikation (13, 14) ist, und **dadurch**, daß die besagten Mittel für das Entdecken des Vorhandenseins (16, 17) und die besagten Mittel für die Kommunikation (13, 14) auf verschiedenen Frequenzbändern arbeiten.

## Revendications

1. Système de contrôle pour un objet (1) ou un document, ledit système comportant :
une étiquette électronique (2) ; et un interrogateur (5) destiné à communiquer avec ladite étiquette (2) ; ledit interrogateur (5) étant capable de créer un champ d'interrogation, ladite étiquette (2) ayant des premiers moyens de détection de présence (16, 17) et des moyens de communication (13, 14) avec ledit interrogateur (5), lesdits moyens de détection de présence (16, 17) étant capables de fournir une indication de la présence de ladite étiquette (2) à l'intérieur du champ d'interrogation, dans lequel la détection de la présence de ladite étiquette (2) est interprétée comme une condition d'alarme, dans lequel lesdits premiers moyens de détection de présence (16, 17) sont activés ou désactivés par lesdits moyens de communication (13, 14),
**caractérisé en ce que** lesdits moyens de détection de présence (16, 17) fonctionnent à un niveau de signal d'interrogation qui est inférieur au niveau de signal permettant de mettre en oeuvre les moyens (13, 14) de communication et **en ce que** lesdits premiers moyens de détection de présence (16, 17) et lesdits moyens (13, 14) de communication fonctionnent dans des bandes de fréquence différentes.

2. Système de contrôle selon la revendication 1 dans lequel ladite étiquette (2) inclut des moyens d'enregistrement d'une condition d'alarme.

3. Système de contrôle selon les revendications 1 ou 2, dans lequel ladite étiquette (2) inclut des moyens permettant de générer un signal d'alarme.

4. Système de contrôle selon la revendication 1, dans lequel la détection de la présence de ladite étiquette (2) ou d'une condition d'alarme de ladite étiquette (2), ou d'un signal d'alarme provenant de ladite étiquette (2) déclenche une alarme.

5. Système de contrôle selon la revendication 1 dans lequel ladite étiquette (2) inclut des seconds moyens de détection de présence (12).

6. Système de contrôle selon la revendication 5 dans lequel lesdits seconds moyens de détection de présence (12) incluent une bande magnétique souple.

7. Système de contrôle selon la revendication 5, dans lequel lesdits seconds moyens de détection de présence (12) ne peuvent pas être désactivés.

8. Système de contrôle selon la revendication 5, dans lequel lesdits premiers moyens de détection de présence (16, 17) et lesdits seconds moyens de détection de présence (12) sont mis en oeuvre dans des bandes de fréquence différentes.

9. Système de contrôle selon la revendication 3 dans lequel ledit signal d'alarme est un signal à un seul bit généré par la modulation d'une porteuse dudit interrogateur (5) fonctionnant ainsi à une puissance inférieure à ce qui est nécessaire pour une communication à bits multiples.

10. Système de contrôle selon la revendication 1 dans lequel ladite étiquette (2) fonctionne dans un premier mode à un premier niveau de signal d'interrogation et dans un second mode à un second niveau de signal d'interrogation plus élevé.

11. Système de contrôle selon la revendication 2 dans lequel ladite condition d'alarme est détectée par ledit interrogateur (5) grâce à un test de contenu d'informations d'énergie à l'intérieur d'une bande latérale d'un signal d'interrogation.

12. Système de contrôle selon la revendication 2 dans lequel ladite condition d'alarme est détectée par un examen indépendant à l'intérieur dudit interrogateur (5) d'une bande latérale supérieure et inférieure d'un signal d'interrogation.

13. Système de contrôle selon la revendication 1 incluant une piste scannée électroniquement (28) et une goulotte secondaire sous écran pour le passage des objets munis d'une étiquette, dans laquelle ledit système de contrôle inclut un moyen à l'intérieur de la goulotte secondaire permettant de confirmer que chaque objet porte deux formes indépendantes d'étiquette électronique.

14. Système de contrôle selon la revendication 1 incluant une piste scannée électroniquement (28) et une goulotte secondaire sous écran pour le passage des objets munis d'une étiquette, dans laquelle ledit système de contrôle inclut un moyen permettant d'évaluer la condition de l'étiquette dans la goulotte secondaire, ledit moyen d'évaluation incluant l'examen de deux moyens de détection de présence indépendants.

15. Etiquette électronique (2) adaptée à une utilisation avec un système de contrôle pour un objet ou un document, ladite étiquette (2) ayant des moyens de détection de présence (16, 17) et des moyens (13, 14) de communication avec un interrogateur (5), ledit interrogateur (5) étant capable de créer un champ d'interrogation, lesdits moyens de détection de présence (16, 17) étant capables de fournir une indication de la présence de ladite étiquette (2) à l'intérieur du champ d'interrogation, dans laquelle lesdits moyens de détection de présence (16, 17) sont activés ou désactivés par lesdits moyens (13, 14) de communication,
**caractérisé en ce que** lesdits moyens de détection de présence (16, 17) fonctionnent à un niveau de signal d'interrogation qui est inférieur au niveau de signal permettant de mettre en ouvre les moyens (13, 14) de communication et **en ce que** lesdits moyens de détection de présence (16, 17) et lesdits moyens (13, 14) de communication fonctionnent dans des bandes de fréquences différentes.
